Europäisches Patentamt

European Patent Office

Office européen des brevets

(11) Veröffentlichungsnummer: **0 183 872 B1**

(12) **EUROPÄISCHE PATENTSCHRIFT**

(45) Veröffentlichungstag der Patentschrift: **18.09.91**

(51) Int. Cl.⁵: **C09J 161/12**, C09J 197/02, C08L 61/12, C08L 97/02

(21) Anmeldenummer: 84114931.3

(22) Anmeldetag: 07.12.84

(54) **Verfahren zur Herstellung einer Leimmischung, speziell zur Herstellung von Holzkonstruktionen, -Platten und ähnlichen Produkten.**

(30) Priorität: 26.11.84 FI 844635

(43) Veröffentlichungstag der Anmeldung:
11.06.86 Patentblatt 86/24

(45) Bekanntmachung des Hinweises auf die Patenterteilung:
18.09.91 Patentblatt 91/38

(84) Benannte Vertragsstaaten:
AT BE DE FR GB IT NL SE

(56) Entgegenhaltungen:
GB-A- 996 918

WPI, FILE SUPPLIER, Derwent Publications Ltd, London, GB, AN-75-63218W; JP-B-75 025 491 (YAMASHITA) 23-08-1975

CHEMICAL ABSTRACTS, vol. 98, 1983, page 48, Zusammenfassung Nr. 108445m, Columbus, Ohio, US; & SU-A-981 327 (KALININ PO-LYTECHNIC INSTITUTE) 15-12-1982

(73) Patentinhaber: VALTION TEKNILLINEN TUTKI-MUSKESKUS
Vuorimiehentie 5
SF-02150 Espoo 15(FI)

(72) Erfinder: Kankaanpää, Pentti
Horsmatie 6
FI-04260 Kerava(FI)
Erfinder: Kilpeläinen, Harri
Venuksentie 6 D 154
FI-01480 Vantaa 48(FI)

(74) Vertreter: Zipse + Habersack
Kemnatenstrasse 49
W-8000 München 19(DE)

## Beschreibung

Die Erfindung betrifft ein Verfahren zur Herstellung einer Leimmischung speziell zur Herstellung von Holzkonstruktionen, -platten und ähnlichen Produkten, welche Leimmischung Resorzin-Phenol-Harz und Humussubstanzextrakt enthält.

Die Resorzin-Phenolleime sind allgemein bekannt. Als hauptsächliche Ausgangsstoffe dieser Leime werden Resorzin, Formaldehyd und Phenol verwendet. Der Leim wird in einem Reaktor hergestellt, wo die Ausgangsstoffe unter einem an gemessenen Druck und bei einer an gemessenen Temperatur eingebracht werden. Die Reaktion wird im Vorkondensatstadium abgebrochen. Wenn der Leim z.B. bei der Herstellung von Leimholzträgern und anderen Holzkonstruktionen verwendet wird, wird die Reaktion durch Zusatz eines Härtungsmittels, z.B. Formaldehyd, zu Ende geführt.

Ein Nachteil bei der Verwendung und Herstellung der Resorzin-Phenolleime ist u.a. der hohe Preis dieser Leime und der Ausgangsstoffe und der Umstand, dass die Ausgangsstoffe schwer erhältlich sind. Aus JP-B- 75 025 491 ist eine Leimmischung, enthaltend ein Resorzin-Phenolharz und ein Erdalkalimetallsalz von Humussäure als Füllstoff bekannt Die Aufgabe der Erfindung ist die teilweise Behebung der Schwierigkeiten der Anschaffung der Ausgangsstoffe, besonders des Resorzins, und eine noch günstigere Herstellung einer Leimmischung auf Resorzin-Phenolbasis zu ermöglichen. Die Erfindung wird durch die in den Patentansprüchen aufgeführten Merkmale gekennzeichnet.

Im Vergleich mit den heute üblichen Resorzin-Phenolleimen werden mit der Erfindung folgende Vorteile erreicht. Ein Teil des in der Leimmischung gebrauchten Resorzin-Phenolharzes kann durch einen aus Torf, vorzugsweise einem zersetzten Teil desselben, hergestellten Humussubstanzextrakt oder durch eine aus diesem Extrakt und Formaldehyd hergestellte Zusammensetzung ersetzt werden. Ausgeführte Versuche haben das Ergebnis geliefert, dass etwa die Hälfte der Leimmischung durch den Humussubstanzextrakt ersetzt werden kann. Der Extrakt ist leicht herzustellen sowie auch die Leimmischung. In solchen Ländern, wo es Moore und Moorgelände gibt, ist Torf immer zu haben. Mit dem Humussubstanzextrakt können auch die heute in Resorzin-Phenolleimen üblichen Füllmittel, z.B. Holzstaub ersetzt werden. In ökonomischer Hinsicht ist der Extrakt beträchtlich günstiger als Resorzin-Phenolharz. Das Preisverhältnis ist heute 1 : 10. Ausserdem wird mit der Leimmischung eine solide, wetterfeste Leimfuge erreicht, die die in den Standarden und Normen vieler Länder an Holzkonstruktionen gestellten Forderungen der sog. Exterior-Klebungsklasse erfüllt.

Als Ausgangsstoff des Humussubstanzextrakts dient der im mittleren Grad oder völlig zersetzte Teil des Torfes. Die Struktur einer Torfschicht von der schwach zersetzten obersten Schicht auf der Erdoberfläche hinab bis zur stark zersetzten untersten Schicht geht aus der beiliegenden Tabelle 1 hervor. Der Zersetzungsgrad wird nach der Skala H1 - H10 (Humositätszahl) gemessen.

Der Anteil der Humussubstanzen ist am grössten, etwa 50-60 %, im starkzersetzten Torf, dessen Verwertung diese Erfindung ausdrücklich gilt.

TABELLE 1:

| | | |
|---|---|---|
| | SCHWACH ZERSETZT<br>H 1 - H 3 | KOHLEHYDRATE 30-50 %<br>LIGNIN 30-40 %<br>HUMUSSUBSTANZEN 0-5 % |
| TORF-<br>SCHICHT | IN MITTEREN GRAD<br>ZERSETZTER TORF | KOHLEHYDRATE 15-40 %<br>LIGNIN 5-30 %<br>TORFWACHSE U. -HARZ 5-15 %<br>HUMUSSUBSTANZEN 20-30 % |
| | STARK ZERSETZTER<br>TORF<br>H 9 - H 10 | KOHLEHYDRATE 0-2 %<br>LIGNIN 5-20 %<br>TORFWACHSE U. HARZE 5-20 %<br>HUMUSSUBSTANZEN 50-60 % |

Humussubstanzen, besonders Humussäuren, enthalten Polyphenolverbindungen, deren Bildung und Struktur noch teilweise unbekannt sind. Die Humussäuren enthalten ferner Resorzin.

Die Hauptkomponenten der Humussubstanzen, die Humussäuren, können durch alkalische wässrige Lösungen vom Torf getrennt werden. Es ist wichtis, dass die gebrauchten alkalischen wässrigen Lösungen dünn sind $\leq$ 5 %, damit der Lignin im Torf sich davon nicht im Extrakt abscheidet, sondern vom Feststoff festgehalten wird.

Zur Veranschaulichung der Erfindung wird hier auf die in folgenden Ausführungsbeispielen beschriebenen Herstellungsverfahren des Humussubstanzenextrakts und der Leimmischung hingewiesen:

Herstellung des Humussubstanzenextrakts durch eine Alkalilösung aus Torf

Bei der Extraktion des Torfs in einer 1 - 5 %:igen NaOH-Wasserlösung sind die Gewichtsverhältnisse der verschiedenen Substanzen z.B. folgende:

z.B.

1 Gewichtsteil trockenen Torf (gemahlen)

10 Gewichtsteile destilliertes Wasser

10 Gewichts-% NaOH vom Trockengewicht des Torfes.

Die Substanzen werden in ein Gefäss eingesetzt, dessen Temperatur unter gleichzeitiger Umrührung bis auf 80° C erhöht wird. Die Behandlung wird eine Stunde fortgesetzt. Danach werden die Feststoffe mit einem Zentrifugalseparator von der Extraktionslösung abgetrennt. Die Feststoffe werden entfernt und die Extraktionslösung wird wiedergewonnen und z.B. durch Wärmekammertrocknung bei 50° C getrocknet. Bei dem auf diese Weise extrahierten Torf ist die Ausbeute etwa 60 % des Trockentorfgehalts.

1. Herstellung einer Humusextrakt-Leimmischung

Der Humussubstanzextrakt wird mit einer Hammermühle oder einem Scheibenraffineur, dessen Klingeneinstellung 0,2 mm ist, feingemahlen. Die Gewichtsverhältnisse der verschiedenen Substanzen in der Mischung sind:

1 Gewichtsteil Humussubstanzextrakt

2 Gewichtsteile Wasser.

Die so erhaltenen Mischung wird zu Resorzin-Phenolharz zugesetzt.

## 2. Herstellung einer Humussubstanzextrakt-Leimmischung

Der Humusextrakt wird auf die oben beschriebene Weise mit einer Hammermühle oder einem Scheibenraffineur feingemahlen. Zum Extrakt wird Paraformaldehyd zugesetzt. Die Gewichtsverhältnisse der veschiedenen Substanzen in der Mischung sind:

1 Gewichtsteil Humussubstanzextrakt

10 - 20 Gewichtsteile Paraformaldehyd auf Gewicht des Extraktes bezogen

2 Gewichtsteile Wasser.

Eine so erhaltene Mischung wird zu Resorzin-Phenolharz zugesetzt.

Bevorzugt sind die Verhältnisse der verschiedenen Komponenten in der Leimmischung, d.h. Humussubstanz-Leimmischung folgende:

- 40 - 90 Gew.-% Resorzin-Phenolharz, dessen Trockensubstanzgehalt 30 - 60 Gew.-% ist,
- 10 - 60 Gew.-% aus Torf hergestellter Humussubstanzextrakt, der durch z.b. die oben erläuterten Herstellungsverfahren hergestellt worden ist.

Zur Erreichung der erforderlichen Viskosität kann zur Mischung 0 - 20 Gew.-% Wasser zugesetzt werden. Zur Leimmischung wird vor der Anwendung 5-20 % Härtungsmittel zugesetzt. Als Härtungsmittel dient z.B. Formaldehyd.

BEISPIEL 1:

Aus dem Humussubstanzextrakt und Resorzin-Phenolharz wurde eine Leimmischung nach der Tabelle 2 hergestellt. Die Zusammensetzung des entsprechenden normalen Resorzin-Phenol (RPh)-leims wird auch in der Tabelle 2 angegeben.

```
TABELLE 2:
```

| Normale RPh-Leimmischung: | Extraktleimmischung: |
|---|---|
| Resorzin-Phenolharz 100 Gew.-teile | Resorzin-Phenolharz 50 Gew.-teile |
| Härtungsmittel | Humusextrakt 50 Gew.-teile |
| (+ Füllmittel)15 Gew.-teile | Härtungsmittel 15 Gew.-teile |

Mit der Leimmischung nach der Erfindung wurde ein Leimholzbalken aus 6 Lamellen zusammengeklebt. Der Leim wurde mit einem Spachtel in einer Quantität von 300 g/m² aufgestrichen. Der Pressdruck war 8 kp/cm², die Pressdauer 4 h, die Temperatur 25° C. Die Dimensionen des fertigen Probebalkens waren: die Länge 600 cm, die Höhe 190 cm (6 Lamellen) und die Breite 120 mm, die Holzart: Fichte. Man liess den Balken 4 Tage in einem RH 65 % Zustand sich ausgleichen. Danach wurden aus dem Balken Probestücke für folgende Versuche abgesägt:

1) Ein Delaminierungsversuch nach dem amerikanischen Standard ASTM D 1101-59. Bei diesem Versuch werden die Probestücke zweimal befeuchtet und getrocknet. Der Versuch dauert etwa 8 Tage.

2) Der Schubfestigkeitsversuch der Leimfuge nach dem amerikanischen Standard ASTM D 905-49.

Die Ergebnisse der Versuche:

1) Das Ergebnis des Delaminierungsversuchs betrug 5 %.

2) Der Schubfestigkeitsversuch der Leimfuge ergab als Durchschnittswert von 20 Stücken 9,29 N/mm² und als Abbruch vom Holz (wood failure) 95 %.

Nach dem Standard ASTM D 1101-59 darf das Delaminierungsprozent nach einer zweiphasigen Probe nicht 5 % überschreiten. In dem Schubfestigkeitsversuch nach dem Standard ASTM D 905-49 muss die Schubfestigkeit der Leimfuge nach den gemeinnordischen Direktiven wenigstens 6 N/mm$^2$ und der Abbruch vom Holz wenigstens 50 % betragen. Die Ergebnisse erfüllen also die gestellten Forderungen.

BEISPIEL 2:

Mit einer Mischung des Torfextrakts und des Resorzin-Phenolleims wurden Klebeversuche bei Zimmertemperatur ausgeführt. Die Leimmischungen werden in der Tabelle 3 angegeben.

Mit der Leimmischung U4 wurde aus 33 × 120 mm Fichtenbrettern ein Balken mit einer Länge von 550 mm und einer Höhe von 165 mm (5 Lamellen) zusammengeklebt. Die Streichquantität des Leims war 400 g/m$^2$, die Pressdauer 3,5 Stunden, der Pressdruck 8 kp/cm$^2$ und die Presstemperatur +25° C.

TABELLE 3:

| Substanz | Mischung (Gew.-verhältnis%) | | | |
|---|---|---|---|---|
| | U4 | U5 | U6 | V |
| Resorzin-Phenolharz (RPh-30) | 45 | 40 | 43,5 | 87 |
| Härtungsmittel | 5 | - | - | 13 |
| Humussubstanz-Extraktpulver | 14 | 20 | 17 | - |
| Paraformaldehyd | 2 | 4 | 4 | - |
| Wasser | 34 | 36 | 34,5 | - |

Die Schubfestigkeit der Leimfugen des Balkens wurde nach dem amerikanischen Standard ASTM-D 905 (die sog. block-shear-Probe) bestimmt. Als Durchschnittwert der Schubfestigkeit der 20 Probestücke erhielt man 9,5 N/mm$^2$, als Durchschnittsstreuung 1,6 N/mm$^2$ und als Wert der charakteristischen Schubfestigkeit 6,3 N/mm$^2$. Die entsprechende Festigkeit der Leimfuge der Leimholzträger soll 6,0 N/mm$^2$ betragen.

Mit den Leimmischungen U5, U6 und dem normalen RPh-30-Leim (V) wurden close-contact-Probestücke gemäss B.S. 1204, die in dem gemeinnordischen Annahmetest der Balkenklebstoffe gebraucht werden, geklebt. Das Rohmaterial bestand aus Birke. Die Pressdauer bei der Zimmertemperatur war 5 Stunden. Die Probestücke wurden 2 Tage nach der Klebung geprüft. Als Wert der Schubfestigkeit der Leimfuge erhielt man (Durchschnittswert von 10 Stücken):

Leimmischung U5:    4,46 N/mm$^2$ in trockener Form
                    3,93 N/mm$^2$ nach 6-stündigen Kochen
Leimmischung U6:    4,79 N/mm$^2$ in trockener Form
Leimmischung V :    4,78 N/mm$^2$ in trockener Form.

Im Vergleich mit dem Vergleichsleim V (RPh-30) wird mit der Humussubstanz-Extraktleimmischung beim Testen derselben in trockener Form also eine abenso hohe Klebungsqualität erreicht, wenn die Hälfte des RPh-Harzes mit einer Mischung des Torfextrakts und Wassers (U6) ersetzt ist. Im B.S. 1204 wird von einer Leimfuge nach 6-stündigem Kochen eine Schubfestigkeit von 2,4 N/mm$^2$ gefordert, die also klar überschritten wird, wenn die Humussubstanzextrakt-Wassermischung sogar mehr als die Hälfte des RPh-Harzanteils beträgt.

**Patentansprüche**

1. Verfahren zur Herstellung einer Leimmischung insbesondere zur Herstellung von Holzkonstruktionen, -platten und ähnlichen Produkten, wobei die Leimmischung Resorzin-Phenolharz und Humussubstanzextrakt enthält, **gekennzeichnet** durch folgende Produktionsschritte:
   a) gemahlener Torf wird in einer 1-5%igen wässrigen Alkalilösung unter Erhitzung extrahiert,
   b) die Feststoffe werden entfernt und die Extraktionslösung zu Humussubstanzextrakt eingetrocknet,

c) das Humussubstanzextrakt wird feingemahlen und mit
   c1) Wasser oder mit
   c2) Paraformaldehyd und Wasser gemischt,
d) der erhaltenen Mischung wird zur Bereitung einer Leimmischung 40-90 Gew.% Resorzin-Phenolharz mit einem Trockensubstanzgehalt von 30-60 Gew.% zugesetzt,
e) zu welcher Leimmischung vor der Anwendung 5-20 Gew.% eines an und für sich bekannten Härtungsmittels, z.B. Formaldehyd, zugesetzt wird.

2. Verfahren nach Anspruch 1, dadurch **gekennzeichnet,** daß zum Humussubstanzextrakt 10-20 Gew.% Paraformaldehyd zugesetzt werden.

3. Verfahren nach Anspruch 1 oder 2, dadurch **gekennzeichnet,** daß der Leimmischung zur Erreichung der erforderlichen Viskosität 0-20 Gew.% Wasser zugesetzt werden.

**Claims**

1. Method for preparing an adhesive composition, in particular for preparing wood constructions, wood board and similar products, the adhesive composition containing resorcinol-phenol resin and humus substance extract, characterised by the following production steps:
   a) ground peat is extracted In a 1-5 % strength aqueous alkali solution with heating,
   b) the solids are removed and the extraction solution is dried to leave the humus substance extract,
   c) the humus substance extract is finely ground and mixed with
      c1) water or with
      c2) paraformaldehyde and water,
   d) the mixture obtained is added to the preparation of an adhesive composition of 40-90 wt.% resorcinol-phenol resin having a dry solids content of 30-60 wt.%,
   e) 5-20 wt.% of a hardening agent known per se, for example formaldehyde, is added to this adhesive composition before use.

2. Method according to claim 1, characterised in that 10-20 wt.% of paraformaldehyde are added to the humus substance extract.

3. Method according to claim 1 or 2, characterised in that 0-20 wt.% of water are added to the adhesive composition to attain the required viscosity.

**Revendications**

1. Procédé de préparation d'une composition de colle, en particulier pour la fabrication de constructions en bois, panneaux en bois et produits apparentés, où la composition de colle contient de la résine résorcine-phénol et un extrait de substance d'humus, caractérisé par les étapes de production suivantes :
   a) de la tourbe moulue est extraite par chauffage dans une solution d'alcali, aqueuse à raison de 1 à 5%,
   b) les solides sont éliminés et la solution d'extraction est séchée pour donner un extrait de substance d'humus,
   c) l'extrait de substance d'humus est soumis à un broyage fin et mélangé à
      c1) de l'eau ou à
      c2) un paraformaldéhyde et de l'eau,
   d) on ajoute au mélange obtenu de 40 à 90% en poids de résine résorcine-phénol, d'une teneur en substance sèche de 30 à 60% en poids, en vue de préparer une composition de colle,
   e) on ajoute à cette composition de colle, avant application, de 5 à 20% en poids d'un durcisseur connu en soi, par exemple un formaldéhyde.

2. Procédé selon la revendication 1, caractérisé en ce que de 10% à 20% en poids de paraformaldéhyde est ajouté à l'extrait de substance d'humus.

3. Procédé selon la revendication 1 ou 2, caractérisé en ce que de 0 à 20% en poids d'eau est ajoutée à la composition de colle, en vue d'atteindre la viscosité nécessaire.